# EUROPEAN PATENT APPLICATION

(11) **EP 4 024 643 A1**
(43) Date of publication of application: **06.07.2022**
(21) Application number: 20217922.2
(22) Date of filing: 30.12.2020
(51) Int. Cl.: H02J 3/00, H02J 3/38, G06F 30/20, G06Q 10/04, G06Q 50/06

(54) **SIMULATING A QUANTITY OF INTEREST OF LARGE SOLAR ENERGY INSTALLATIONS**

(71) Applicant: Imec VZW, 3001 Leuven (BE)
(72) Inventor: HORVATH, Imre Tamas, 3001 Leuven (BE); SCHILS, Arnaud, 3001 Leuven (BE)
(74) Representative: DenK iP bv

(57) **Abstract**

A method for simulating a quantity of interest of a solar energy installation comprising a plurality of solar energy elements (2) and/or of parts thereof, comprising: identifying (103) a plurality of groups of solar energy elements within the solar energy installation, wherein a performance variable is similar for each of the solar energy elements (2) within the group; obtaining (104), for each group, a representative solar energy element (2) of which the performance variable is representative for the group; simulating (105) a quantity of interest of the representative solar energy element (2) of each group; and determining (106), from the quantity of interest of the representative solar energy element (2) of each group, the quantity of interest of the solar energy installation and/or of at least one solar energy element (2) of the solar energy installation.

## Description

### Technical field of the invention

The present invention relates to simulating a quantity of interest, such as a power output, of a solar energy installation.

### Background of the invention

In order to estimate revenues to secure financing of solar energy installations comprising a plurality of solar energy elements, such as photovoltaic power plants comprising a plurality of photovoltaic elements, e.g. photovoltaic solar cells, strings or modules, and to facilitate integration of solar energy installations into an electricity grid, there is a growing demand for methods for simulating a quantity of interest of solar energy installations. Herein, the quantity of interest may comprise, for instance, a power output, current-voltage characteristics, or a mean surface temperature of solar cells, of the solar energy installation. The quantity of interest of a solar energy installation is a complicated function of a plurality of parameters, such as, but not limited to, local weather conditions, orientation of the plurality of solar energy elements, type of solar energy elements, electrical layout, and shading. The most accurate approach for calculating the quantity of interest of a solar energy installation would be to determine the quantity of interest for each of the plurality of solar energy elements of the solar energy installation. However, contemporary solar energy installations can be huge. For example, photovoltaic power plants may exceed 10⁵ photovoltaic modules. Therefore, determining the quantity of interest of each of the plurality of solar energy elements of the solar energy installation requires an immense computational cost. For instance, for a photovoltaic power plant comprising 10⁵ photovoltaic modules, the computational time can be 10 hours using a computing server, whereas industry accepts only up to 15 minutes of computing.

To reduce computation costs, existing simulation methods generally use a lumped approach. In the lumped approach, a solar energy engineer selects, based on personal experience, representative solar energy elements e.g. modules or strings, within the solar energy installation. Next, the quantity of interest of the selected representative solar energy elements is calculated using modelling. Finally, the modelled quantity of interest of the representative solar energy elements are extrapolated to the solar energy installation.

Although the lumped approach is simple, there are a number of disadvantages. Firstly, calculated performances of the solar energy installation depend on the personal experience of the solar energy engineer. Therefore, the lumped approach cannot be standardized.

Secondly, for emerging technologies, such as bifacial photovoltaic modules and sun tracking systems, no engineer has enough experience required to meaningfully select the representative solar energy elements.

Thirdly, the lumped approach is only meaningful for solar energy installations with limited complexity, that is, wherein the quantity of interest is clearly similar for large groups of the solar energy elements within the solar energy installation. Therefore, when, for instance, irregular terrain is used for solar energy installations, or for instance in an urban environment with a lot of shading, the quantity of interest of the solar energy installation calculated with the lumped approach may be too inaccurate.

Therefore, a new method is needed, that allows for accurately determining the quantity of interest for large and complicated solar energy installations, while, at the same time, keeping the computational cost within acceptable boundaries.

### Summary of the invention

It is an object of the present invention to provide good apparatus or methods for simulating a quantity of interest of a solar energy installation.

The above objective is accomplished by a method and device according to embodiments of the present invention.

It is an advantage of embodiments of the present invention that the method may be used to assess the quantity of interest of a solar energy installation, without requiring field measurements.

It is an advantage of embodiments of the present invention that the quantity of interest can be calculated with a minimum of computer resources, even for large and complicated solar energy installations.

It is an advantage of embodiments of the present invention that a large accuracy of the quantity of interest may be reached, even for large and complicated solar energy installations.

It is an advantage of embodiments of the present invention that they enable to calculate quantities of interest starting from only physical parameters as inputs, thereby eliminating the need for empirical tuning coefficients and offering a standardized way of simulating large solar energy installations.

It is an advantage of embodiments of the present invention that the method can also be applied to small and simple solar energy installations.

In a first aspect, the present invention relates to a method for simulating a quantity of interest of a solar energy installation comprising a plurality of solar energy elements and/or of parts thereof, e.g. of at least one solar energy element, preferably of a plurality of solar energy elements. The method comprises:
a) identifying a plurality of groups of solar energy elements within the solar energy installation, wherein a performance variable is similar for each of the solar energy elements within the group, wherein the performance variable of each of the solar energy elements is predictive for a quantity of interest of the solar energy element as dependent on position of the sun relative to the position of the plurality of solar energy elements and on meteorological conditions,
b) obtaining, for each group, a representative solar energy element of which the performance variable is representative for the group,
c) simulating a quantity of interest of the representative solar energy element of each group, and
d) determining, from the quantity of interest of the representative solar energy element of each group, the quantity of interest of the solar energy installation and/or of at least one solar energy element, preferably of a plurality of solar energy elements, of the solar energy installation. The determining may include a step of calculating.

It is an advantage of embodiments of the present invention that identifying the plurality of groups, and identifying representative solar energy elements within each of the plurality of groups, is based on a physical parameter. Therefore, the method of the present invention yields reproducible results. Furthermore, the method of the present invention may not require experience with technology used within the solar energy installation.

In embodiments, the quantity of interest may be any quantity that may be relevant for the solar energy installation and/or for parts thereof, e.g. for at least one solar energy element of the solar energy installation. In embodiments, the quantity of interest may comprise any physical characteristic that may be derived from a model, such as: an energy output; a current; a voltage; a power of an operating point, wherein the operating point corresponds to a current and a voltage on a current-voltage characteristic curve resulting in a maximum power output; a rate of degradation, such as thermally or light-induced degradation, of the solar energy elements e.g. the photovoltaic elements; or a mean temperature. In particular embodiments, the quantity of interest may comprise a physical characteristic of the solar energy installation, such as the power output of the solar energy installation, or the voltage across the solar energy installation. However, in other embodiments, the quantity of interest may be the physical characteristic of parts of the solar energy installation, or of each of the solar energy elements of the solar energy installation, such as of the at least one solar energy element of the solar energy installation. For example, the quantity of interest of the solar energy installation may comprise the energy output e.g. power output of each of the solar energy elements of the solar energy installation, or the voltage across a section of the solar energy installation. Thereby, the method allows for analysis of the solar energy installation on the level of individual solar energy elements, without being limited thereto.

In embodiments, the at least one solar energy element for which a quantity of interest is simulated is different from the representative solar energy elements. In embodiments, the at least one solar energy element of the solar energy installation comprises multiple solar energy elements of the solar energy installation, preferably each of the plurality of solar energy elements of the solar energy installation. In preferred embodiments, the at least one solar energy element of the solar energy installation comprises an amount of solar energy elements that is larger than an amount of groups. Advantageously, by simulating the quantity of interest for the representative solar energy elements, the quantity of interest of any, or even each, of the plurality of solar energy elements within the solar energy installation may be determined, which may save an enormous amount of computational resources. For example, the quantity of interest may be pre-calculated for the representative solar energy elements, from which, when needed, the quantity of interest of the at least one solar energy element can be directly derived. In preferred embodiments, the method is for calculating the quantity of interest of the solar energy installation. Although this calculation could normally require the most computational resources, the method according to embodiments of the present invention severally limits the computational resources that are required.

The solar energy installation comprises a plurality of solar energy elements, wherein "a plurality" means that the solar energy installation comprises at least two solar energy elements. However, advantageously, the solar energy installation may comprise many more, such as thousands, tens of thousands, or even hundreds of thousands of solar energy elements: in embodiments, the method of the present invention allows for modelling the quantity of interest of the solar energy installation even if it comprises a very large amount of solar energy elements. The solar energy installation may comprise any installation for generating, e.g. thermal or electric, power, wherein solar energy elements are used to generate the power. In embodiments, the solar energy installation is a photovoltaic power installation. In embodiments, the photovoltaic power installation may comprise a photovoltaic power plant, or a section of the photovoltaic power plant, for instance designed for supply of electrical power into an electricity grid. However, the invention is not limited thereto. In embodiments, electric power generated by the photovoltaic power installation may be used into an electrolyzer e.g. for electrolysis of water to produce hydrogen gas. In embodiments, the photovoltaic power installation may comprise a lab, land-based, rooftop, an integrated or a floating photovoltaic system. The photovoltaic system may, for example, include monofacial or bifacial photovoltaic cells that may be installed or not on a sun tracking frame. The photovoltaic power installation may be for supply of electrical power for local use, or into an electricity grid. In still different embodiments, the solar energy installation is a solar thermal collector installation for converting sunlight into thermal power, for instance comprised in a heated liquid, that is, wherein the liquid is heated by the sunlight. The solar thermal collector installation may be for supply of thermal power for local use, or possibly for use elsewhere, such as after transportation of the heated liquid comprising the thermal power e.g. via tubes.

Typically, the solar energy element is an element that may convert energy of light, in particular sunlight, into useable energy. For example, the solar energy element may be a photovoltaic element that may convert energy of light into electrical power. The solar energy element may comprise any subdivision of the solar energy installation. In embodiments wherein the solar power installation is the photovoltaic power installation, the solar energy element is a photovoltaic element that is preferably at least as large as a photovoltaic solar cell. For instance, in these embodiments, the photovoltaic element may be a photovoltaic solar cell, a photovoltaic cell-string, a photovoltaic sub-module, a photovoltaic module, a photovoltaic string, a photovoltaic transformer zone, a photovoltaic sub-plant, or a photovoltaic plant. In embodiments wherein the solar power installation is the solar thermal collector installation, the solar energy element may for instance comprise a solar thermal collector, an array of solar collectors, or a solar thermal collector module comprising multiple solar collectors on the same frame. The solar thermal collector may for instance comprise a flat plate thermal collector or an absorber tube. Dividing the solar energy installation into a plurality of solar energy elements, and simulating the quantity of interest only for a preferably small amount of representatives of the solar energy elements, may drastically reduce computational costs of calculating the quantity of interest of the solar energy installation. Advantageously, the method of the present invention is very flexible in the scale of the solar energy elements. Thereby, the method may facilitate finding a balance between a required accuracy for the modelled quantity of interest of the solar energy installation, and a computing time required for modelling of the quantity of interest. Indeed, the larger the solar energy element, the lower the memory requirement of the simulation, and, at the same time, the lower the spatial resolution of the results.

In particular embodiments wherein the solar energy element is the photovoltaic element, the photovoltaic element is the photovoltaic string. Advantageously, photovoltaic cells or photovoltaic modules belonging to a same photovoltaic string may be installed on frames so that the photovoltaic cells or modules may have identical azimuth and tilt angles, so that illumination may be assumed to be similar for each of the photovoltaic cells or modules of the photovoltaic string. Furthermore, if the photovoltaic element is the photovoltaic string, obtaining a representative in a group may be fast compared to when the photovoltaic element is the photovoltaic module or the photovoltaic solar cell, which may be advantageous for very large solar energy installations. However, for smaller solar energy installations, the photovoltaic element may preferably be the photovoltaic module, as more accurate results may be acquired. For instance, it may be possible to distinguish cells or modules at a top row and bottom row of a frame, for which in particular shading may be different, such as shading due to nearby photovoltaic elements or objects. The photovoltaic string comprises a plurality of photovoltaic cells that are electrically coupled to one another. In embodiments, identification of the strings may be performed by assuming that nearby photovoltaic solar cells or modules belong to the same string or by reading in data describing the mapping of cells or modules from space to electrical layout.

In embodiments, each solar energy element of the plurality of solar energy elements of the solar energy installation is associated with a performance variable that is predictive for the quantity of interest of the solar energy element as dependent on position of the sun relative to the position of the plurality of solar energy elements and on meteorological conditions. In a method in accordance with embodiments of the present invention, a plurality of groups of solar energy elements is identified, such that the performance variable of each of the solar energy elements within the group is similar. Identifying the plurality of groups may comprise any method whereby the identified groups comprise solar energy elements having a similar performance variable. In embodiments, identifying the plurality of groups comprises applying a clustering algorithm such as a k-nearest neighbours algorithm or a k-means algorithm. Advantageously, these algorithms are comparatively fast, so that they allow for rapid identification of the groups. Furthermore, in embodiments, these algorithms are robust, that is, they can be applied to a wide range of solar energy installation designs, without having to adapt the numerical parameters of the algorithms. In embodiments, the solar energy elements may have a different size, e.g. photosensitive surface area. In particular embodiments, the performance variable is independent of the size of the solar energy element. For instance, the performance variable may be weighted with the size.

In embodiments, the amount of groups of solar energy elements is predetermined, or alternatively a predetermined maximum dissimilarity on the performance variable of the solar energy elements in each group is predetermined. Advantageously, by using a predetermined amount of groups, the amount of groups that is identified may be chosen based on the computational resources available. In embodiments, the larger the amount of groups, the larger an accuracy of the modelled quantity of interest of a solar energy installation, but also, the more computational resources required. In alternative embodiments, a predetermined maximum dissimilarity on the performance variable of the solar energy elements in each group may be predetermined. Examples of possible measures of performance variable dissimilarity in a group are the average, or the maximum, of all the distances between any member of the group and the group representative. This distance can be computed using any distance function such as, but not only, Euclidean, Manhattan or any Minkowski distances. Advantageously, in embodiments using a predetermined maximum dissimilarity, the accuracy on the calculated quantity of interest of the solar energy installation may be more accurately predetermined than in embodiments wherein the amount of groups is predetermined. The predetermined amount of groups, or the predetermined maximum dissimilarity, may be based on the complexity of the solar energy installation with respect to e.g. irregularity of a terrain and on types of solar energy elements.

In embodiments, the performance variable of the solar energy element may be any variable associated with a solar energy element that is predictive for the quantity of interest of the solar energy element. The performance variable is typically a physical parameter or is dependent on multiple physical parameters, or may be derived from a physical parameter. In embodiments, the physical parameter may comprise at least one of a distance, a height, a shape and a location of neighbouring solar energy elements and further objects that may cast a shadow on the solar energy element. In embodiments, the physical parameter may comprise a ground clearance of the solar energy element. In embodiments, the physical parameter comprises a tilt angle and/or an azimuth angle of the solar energy element. In embodiments, the performance variable may be obtained for each of the plurality of solar energy elements, for instance from field measurements, or may be calculated for each of the plurality of solar energy elements. In embodiments wherein the performance variable is calculated, the computational cost of calculating the performance variable of the solar energy element is preferably low, and at least lower, preferably considerably lower, than the computational cost of calculating the quantity of interest of the solar energy element.

In embodiments, the performance variable of a solar energy element comprises or is proportional to a sensitivity of the solar energy element to radiation, that is, light e.g. sunlight, from each of a plurality of sky sections. That is, the more radiation from a sky section reaches the solar energy element, the larger the sensitivity of the solar energy element to radiation from the sky section. Similarly, the less radiation from a sky section reaches the solar energy element e.g. as the radiation is blocked by objects or adjacent solar energy elements or because the solar energy element is not well aligned to collect radiation e.g. sunlight from the sky section, the smaller the sensitivity of the solar energy element to radiation from the sky section. Thereby, the performance variable may characterize the sensitivity of the solar energy element to changes in the brightness of each of the plurality of sky sections. In general, each of the solar energy elements is sensitive towards light from a particular sky section, but may be not sensitive towards light from a different particular sky section. For instance, a particular sky section may be obscured for the solar energy element e.g. by an object, such as other solar energy elements or trees. In that case, the solar energy element may not be sensitive towards any light from the particular sky sections. In another example, a different particular sky section may not be obscured for the solar energy element, and furthermore, a surface of the solar energy element faces the different particular sky section. In that case, the solar energy element may be very sensitive towards any light from the different particular sky section. In embodiments, by identifying groups of solar energy elements wherein the sensitivity of each of the solar energy elements of the group towards radiation from each of a plurality of sky sections is similar, the quantity of interest as dependent on position of the sun and on meteorological conditions, e.g. after weighting of the quantity of interest for the size of the solar energy elements, is also similar.

In particular embodiments, the performance variable is a sky-sensitivity vector comprising a sensitivity of the solar energy element, such as of a photosensitive surface of the solar energy element, to radiation from each of a plurality of sky sections. Similar as above, the more radiation from a sky section reaches the solar energy element, the larger the sensitivity of the solar energy element to radiation from the sky section. Similarly, the less radiation from a sky section reaches the solar energy element e.g. as the radiation is blocked by objects or adjacent solar energy elements or because the solar energy element is not well aligned to collect radiation e.g. sunlight from the sky section, the smaller the sensitivity of the solar energy element to radiation from the sky section. The sky-sensitivity vector (i.e. "daylight coefficient") has been previously described in Tregenza and Waters, Lighting Research & Technology 15 (1983) pages 65-71, and in the PhD dissertation of John Mardaljevic called "Daylight Simulation: Validation, Sky Models and Daylight Coefficients" from 2000. In embodiments, a value of the sky-sensitivity vector for a particular sky section correlates with a ratio of the radiation from the particular sky-section that is incident on the surface of the solar energy element, to the total radiation, e.g. sunlight, from the particular sky-section.

In embodiments wherein the performance variable is a sky-sensitivity vector, the sensitivity of a solar energy element to radiation from each of a plurality of sky sections is representative of a relative position or viewing angle between the sky-section and the solar energy element. Furthermore, the sensitivity of the solar energy element to radiation from each of the plurality of sky sections may depend on a geometry of surroundings e.g. buildings and pylons. Furthermore, the sky-sensitivity vector of the solar energy element may depend on the optical properties of the surrounding geometry. For example, high-reflectivity materials nearby the solar energy element can enhance the sky-sensitivity vector for certain sky segments. In embodiments, by considering only the sensitivity of the solar energy element to radiation from the sky sections (i.e. the sensitivity of the solar energy element to the sky sections), the sky-sensitivity vector is only proportional to natural irradiation of the solar energy element. Herein, irradiation by the entire sky dome is considered: that is, both direct radiation (direct radiation) by the sun and indirect radiation (diffuse radiation) from every sky location are considered. Indirect radiation may for example result from sunlight being reflected by clouds, the atmosphere, the ground surface and/or nearby objects. In embodiments, as the sky-sensitivity vector for each of a plurality of sky sections is similar for each of the solar energy elements within the group, also the dependency of the quantity of interest on position of the sun relative to the position of the plurality of solar energy elements and on meteorological conditions, is similar for each of the solar energy elements within the group. Advantageously, the computational cost of calculating the sky-sensitivity vector is considerably lower than the computational cost of calculating the quantity of interest of the solar energy element.

Qualitatively, the sky-sensitivity vector of a solar energy element for a sky-section may be assumed to be related with a visibility of the solar energy element from the sky-section. That is, if the solar energy element is in clear sight from the sky-section, the sky-sensitivity vector of the solar energy element to radiation from the sky-section may be large. On the other hand, if the solar energy element is obscured from sight from the sky-section e.g. by an object, the sky-sensitivity vector of the solar energy element to radiation from the sky-section may be small.

In some embodiments, the sky-sensitivity vector is independent of radiance from each of the plurality of sky sections, that is, the sky-sensitivity vector is not weighted with a solar radiance distribution. However, in alternative embodiments, the sky-sensitivity vector is weighted with a solar radiance distribution as dependent on sky section. The solar radiance distribution may for instance be a long-term averaged solar radiance distribution. Advantageously, by weighting the sky-sensitivity vector with the solar radiance distribution, sky sections with a relatively low amount of radiance do not very much affect the identification of groups. Thereby, the identification of groups may be dominated by the visibility of each of the plurality of solar energy elements from sky sections with a large radiance. The solar radiance distribution as dependent on sky section may, for instance, comprise data of past events or modelled data, wherein the data may, for instance, comprise time series data or a function.

The sky-sensitivity vector for the solar energy element may be derived by any suitable method. In embodiments, the sky-sensitivity vector for the solar energy element is determined by solving a Rendering equation. The Rendering equation is a well-known integral equation in which the equilibrium radiance leaving a point on a surface in a direction is given as the sum of emitted radiance plus reflected radiance under a geometric optics approximation. The Rendering equation may yield the amount of radiance incident on the solar energy element, by calculating the amount of radiance propagating from a plurality of points in the direction of the solar energy element. The Rendering equation may be calculated by any technique suitable for solving the Rendering equation. Advantageously, many techniques and software packages exist for solving the Rendering equation. In embodiments, the sky-sensitivity vector for the solar energy element is determined by modelling propagation of a plurality of rays from the solar energy element, such as from a photosensitive surface of the solar energy element, towards each of the plurality of sky sections, and determining the sensitivity of the solar energy elements to radiation from each of the plurality of sky sections. Herein, in embodiments, the modelling of the propagation may be used for solving the Rendering equation. In embodiments, the propagation may be modelled by means comprising deterministic ray tracing, e.g. using a finite element method. In embodiments, the propagation may be modelled by means comprising backward Monte-Carlo ray tracing. In particular embodiments, the propagation may be modelled by means of deterministic ray tracing and backward Monte-Carlo ray tracing. In embodiments, solving the Rendering equation for the solar energy element comprises modelling propagation of a plurality of rays from the solar energy element towards each of the plurality of sky sections by means of backward Monte-Carlo ray tracing. Monte-Carlo algorithms rely on repeated random sampling to obtain numerical results which are approximations of the image of a complicated function for which an analytical solution is not available. The sky-sensitivity vector for a solar energy element in a solar energy installation may belong to the image of, e.g. may be derived from, such a complicated function, in particular if a geometry of the solar energy installation is accurately taken account of. In embodiments of the present invention, backward Monte-Carlo ray tracing comprises that the propagation of a plurality of rays is modelled, wherein each of the plurality of rays departs from a selected location on a surface, preferably a photosensitive surface, of the solar energy element and in a semi-random direction. By tracing to which of the plurality of the sky sections each of the plurality of rays propagates, the visibility of the solar energy element from each of the plurality of sky sections, that is, the sensitivity of the solar energy element towards radiation from each of the plurality of sky sections, may be derived. In embodiments, the sensitivity towards radiation from a sky section is proportional to the amount of rays that propagated in the model to the sky section. The more rays are simulated in the backward Monte-Carlo ray tracing model, the more accurate the determined sensitivities and hence the determined sky-sensitivity vector may be.

Backward Monte-Carlo ray tracing is performed "backward" as the propagation of rays from the solar energy elements towards the plurality of sky section is modelled, instead of the natural propagation direction of sun-light, which is from the plurality of sky section towards the solar energy elements. Modelling the propagation of rays from the solar energy elements towards the plurality of sky sections in principle yields the same sky-sensitivity vector as modelling the propagation of rays from the plurality of sky sections towards the solar energy elements. However, modelling the propagation of rays from the solar energy elements towards the plurality of sky sections may be considerably faster than modelling the propagation of rays from the plurality of sky sections towards the solar energy elements: when modelling the propagation of rays from the plurality of sky sections towards the solar energy elements, many of the modelled rays eventually may not hit a surface of the solar energy element, but may hit other surfaces such as the surface of a terrain or the surface of a building. Therefore, backward Monte-Carlo ray tracing may be a relatively efficient algorithm, and may result in limited computing costs. However, the present invention is not limited thereto, and instead, Monte-Carlo ray tracing may be used, that is, wherein the propagation of rays from the plurality of sky sections towards the solar energy elements is modelled.

In embodiments, modelling the propagation of the plurality of rays comprises modelling of transmission, reflection and/or refraction of the rays. Herein, reflection may comprise diffuse and/or specular reflection. Advantageously, by including transmission, reflection and refraction of the rays in the calculations, the sky-sensitivity variable of more advanced solar energy elements may be more accurately modelled. For instance, for solar energy elements comprising bifacial photovoltaic cells, reflection of rays by the terrain may significantly affect the visibility, and therefore the sky-sensitivity vector, of the solar energy element. In another example, when optical components such as mirrors or lenses are used to concentrate solar radiation on the solar energy element, transmission, reflection and refraction of rays by the optical components may considerably affect the sky-sensitivity variable of the solar energy element. In still another example, for solar energy elements in an urban environment, reflection by buildings or refraction through components that improves aesthetics of the solar energy elements may considerably affect the sky-sensitivity variable.

In embodiments, the method of the present invention is applied for the solar energy installation being located on a terrain, wherein the performance variable is calculated by taking into account a 3D layout of the solar energy elements in the solar energy installation and/or a 3D layout of the terrain, and possibly of further objects on the terrain. In these embodiments, advantageously, a large amount of information concerning illumination conditions of the solar energy element is taken into account. Therefore, advantageously, these embodiments may yield a very accurate performance variable. Taking into account further objects e.g. trees, electrical pylons, and buildings, which may cast a shadow on the solar energy elements, may further improve the accuracy of the calculations.

In embodiments, the 3D layout, that is, of the solar energy elements in the solar energy installation and/or of the terrain, and possibly of further objects on the terrain, may comprise a 3D digital model, such as Computer Aided Design (CAD) model. The 3D layout may be generated for instance using suitable 3D modelling software. The 3D layout may for instance be based on drone imaging, or derived from a Geographic Information System database, e.g. Google Earth.

In embodiments, obtaining the representative solar energy element for each group comprises obtaining, e.g. modelling, deriving, or calculating, a mean solar energy element which has mean physical properties among the solar energy elements within the group. In these embodiments, the representative solar energy element, e.g. the mean solar energy element, may have for instance a peak power, azimuth and/or tilt angle, or refractive index of a front glass that is mean for each of the solar energy elements within the group. In alternative embodiments, the representative solar energy element may not be one of the solar energy elements in the group.

In particular embodiments, obtaining the representative solar energy element for each group comprises identifying a representative solar energy element within each group. In these embodiments, the representative solar energy element of a group may be one of the solar energy elements within the group. Identifying the representative solar energy element within each group may comprise any method that yields the solar energy element of which the performance variable is most representative, e.g. most similar, to the performance variable of each of the other solar energy elements within the group. For instance, the representative solar energy element may have a performance variable that is closest to a mean of the performance variables of the solar energy elements within the group. Thereby, it may be assumed that the quantity of interest of the representative solar energy element of the group is most similar to the quantity of interest of each of the solar energy elements within the group, e.g. after weighting of the quantity of interest for the size of the solar energy elements. In embodiments, identifying the representative solar energy element within each group comprises determining the representative solar energy element that is most relevant for the goal of the simulations. In particular embodiments, identifying the representative solar energy element within each group comprises locating a centroid of the performance variable of the solar energy elements of each group, and determining the solar energy element within the group of which the performance variable is most similar to the centroid. Advantageously, the centroid may be located very fast and with a low computational cost. Therefore, the plurality of groups cover a large range of performance variables associated with the solar energy elements within the solar energy installation, enabling an accurate modelling of the quantity of interest of the solar energy installation.

In embodiments, simulating the quantity of interest of the representative solar energy element of each group comprises simulating as a function of time-dependent environmental conditions. Advantageously, by simulating as a function of time-dependent environmental conditions, the quantity of interest of the representative solar energy element under different environmental conditions as dependent on time may be calculated. In embodiments, time-dependent environmental conditions comprise solar irradiance as a function of time and time-dependent meteorological conditions. The environmental conditions may, for instance, comprise a wind velocity, a wind direction, an ambient temperature, a relative humidity, a soiling rate, rainfall and/or other weather events. In embodiments, the environmental conditions comprise data of past or future events or modelled data, wherein the data may, for instance, comprise time series data or functions. For example, the environmental conditions may comprise past meteorological events, forecasts of meteorological events, or modelled meteorological events. Preferably, the simulated environmental conditions are specific for a region of interest, e.g. a potential future region of the solar energy installation. Advantageously, by taking into account environmental conditions, non-uniform ambient conditions and non-steady-state operating conditions of the solar energy element, for instance over a predetermined time period, may be taken account of in modelling of the quantity of interest of the solar energy element.

The quantity of interest of the representative solar energy element of each group may be calculated by any model suitable for determining the quantity of interest of a solar energy element. In embodiments, calculating the quantity of interest of the representative solar energy element comprises simulating an irradiance of the representative solar energy element of each group. In embodiments, the quantity of interest of the representative solar energy element may be calculated using an empirical or semi-empirical relation between irradiance and possibly ambient temperature, and the quantity of interest. For example, when the quantity of interest is a power output, an empirical or semi-empirical relation between irradiance and ambient temperature, and the power output may be used to derive the power output of the representative solar energy element. As another example, when the quantity of interest is a degradation rate of the solar energy element, an empirical or semi-empirical relation between irradiance and a degradation rate may be used to derive a degradation rate of the representative solar energy element. In embodiments, the quantity of interest may be calculated using a machine-learning or artificial intelligence-based model. In embodiments wherein the solar energy element is the photovoltaic element, simulating the quantity of interest of the representative photovoltaic element of each group comprises: simulating an irradiance of the representative photovoltaic element of each group, and, using the irradiance, performing a thermal-electrical simulation of the representative photovoltaic element of each group. Simulating the irradiance of the representative solar energy element, e.g. representative photovoltaic element or representative solar thermal collector element, of each group may comprise backward Monte-Carlo ray tracing, Monte-Carlo ray tracing or deterministic ray tracing. These techniques may also be used for determining the sky-sensitivity vector. Preferably, however, a larger number of rays propagating from a larger number of points from each solar energy element is simulated for simulating the irradiance of the representative solar energy element than for determining the sky-sensitivity vector. Advantageously, this may increase the accuracy of the quantity of interest calculated for the representative solar energy element, while at the same time the computation cost, e.g. for calculating the sky-sensitivity vector, may remain low.

The thermal-electrical simulation may be used for calculating thermal and electrical characteristics of a photovoltaic element under ambient conditions, for instance as dependent on time. From the characteristics, the quantity of interest of the photovoltaic element may be derived. Advantageously, the thermal-electrical simulation, making use of a simulated irradiance of the representative photovoltaic element, may yield an accurate quantity of interest, preferably as dependent on time. The thermal-electrical simulation may comprise a thermal simulation and an electrical simulation that are coupled to each other. In the thermal simulation, a temperature of the photovoltaic cell may be modelled, for instance from the simulated irradiance and/or the environmental conditions such as, for example, wind speed, wind direction and/or ambient temperature. The thermal simulation may comprise calculating a heat generation in the photovoltaic element resulting from absorption of the irradiance. The thermal simulation may take into account convection, conduction and radiation of heat, and a thermal state e.g. the temperature of the photovoltaic element at a moment in time. Furthermore, the thermal simulation may take into account an electrical operation point, e.g. calculated with the electrical simulation, of the photovoltaic element, that is, a voltage and a current at which the photovoltaic element operates. The electrical simulation may use the temperature of the photovoltaic element calculated with the thermal simulation or measured on a real installation as input, to calculate the electrical operation point at which the photovoltaic element operates, and for instance to calculate a power dissipation, which may be inputted in the thermal simulation. The thermal-electrical simulation may provide an output to calculate the quantity of interest of the representative photovoltaic element. For example: the calculated electrical operation point may be used to calculate the voltage over, the current through or the power output of, the representative photovoltaic element; and the calculated temperature of the photovoltaic element may be used to derive the rate of degradation of the photovoltaic element.

In embodiments, the thermal-electrical simulation further comprises an optical absorption model, that may be used to calculate absorption, transmission and reflection of the irradiation incident on the photovoltaic element by the photovoltaic element: the optical absorption model may yield a thermal energy and a current generated by the irradiance, which may be used as an input into the thermal simulation and/or the electrical simulation. EP2998756, describes a particular method that may be used for the thermal-electrical simulation of embodiments of the present invention, comprising using a thermal equivalent circuit and an electrical equivalent circuit, wherein different parts of the photovoltaic element are represented by thermal resistances and/or electrical resistances.

In embodiments, determining the quantity of interest of the at least one solar energy element of the solar energy installation comprises assigning to each of the at least one solar energy element a quantity of interest derived from the quantity of interest of the representative solar energy element of the group to which the solar energy element belongs. In these embodiments, the quantity of interest assigned to the solar energy element may be weighted.

In embodiments, determining, e.g. calculating, the quantity of interest of the solar energy installation comprises assigning to each solar energy element of the group a quantity of interest derived from the quantity of interest of the representative solar energy element. In these embodiments, the quantity of interest assigned to each solar energy element may be weighted. Weighting may be preferred when a size, e.g. photosensitive surface area, of the solar energy element different from a size of the representative solar energy element. In embodiments wherein each of the elements of the group has an equal size, determining, e.g. calculating, the quantity of interest of the solar energy installation may comprise assigning the quantity of interest of the representative of each group to each solar energy element of the group. Advantageously, as all solar energy elements in the group may be assumed to have a similar quantity of interest as the representative, this step may be very fast yet accurate. In particular embodiments, determining, e.g. calculating, the quantity of interest of the solar energy installation comprises assigning to each solar energy element a quantity of interest derived from the quantity of interest of a number of representative solar energy elements. Herein, the number of representative solar energy elements may for instance comprise the representative solar energy elements in the solar energy installation of which the performance variables are most similar for the solar energy element. In these embodiments, the quantity of interest assigned to each solar energy element may for instance be a weighted mean of the number of representative solar energy elements, weighted with respect to the similarity of the performance variables for the solar energy element and each of the number of representative solar energy elements. In these embodiments, the quantity of interest of each of the solar energy elements of the solar energy installation is derived, that is, from the quantity of interest of the representative of each group. Subsequently, the quantity of interest of the solar energy installation may be straightforwardly calculated.

Any features of any embodiment of the first aspect may be independently as correspondingly described for any embodiment of any of the other aspects of the present invention.

In a second aspect, the present invention relates to a use of a performance variable to identify a plurality of groups of solar energy elements within a solar energy installation for calculating a quantity of interest of the solar energy installation and/or of parts thereof, e.g. of at least one solar energy element, preferably a plurality of solar energy elements, of the solar energy installation.

Advantageously, by reducing the solar energy elements/photovoltaic cells in a solar energy installation to groups of solar energy elements/photovoltaic cells, computational cost of calculating the quantity of interest of the solar energy installation may be reduced significantly, while the calculation may nevertheless be very accurate. In particular embodiments, the performance variable is a sky-sensitivity vector.

Any features of any embodiment of the second aspect may be independently as correspondingly described for any embodiment of any of the other aspects of the present invention.

In a third aspect, the present invention relates to a data processing system comprising means for carrying out the steps of a method according to embodiments of the first aspect of the present invention.

Any features of any embodiment of the third aspect may be independently as correspondingly described for any embodiment of any of the other aspects of the present invention.

In a fourth aspect, the present invention relates to a computer program comprising instructions which, when the program is executed by a computer, cause the computer to carry out the steps of a method according to embodiments of the first aspect of the present invention.

Any features of any embodiment of the fourth aspect may be independently as correspondingly described for any embodiment of any of the other aspects of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a schematic overview of a method in accordance with embodiments of the present invention.
FIG. 2 is a part of a 3D model of a photovoltaic power plant.
FIG. 3 is a schematic representation of ray tracing calculations for calculating a sky-sensitivity vector for a photovoltaic element.
FIG. 4 is a 3D plot of a sky-sensitivity vector calculated for a photovoltaic string, projected on a sky dome, calculated in a method in accordance with embodiments of the present invention.
FIG. 5A and 5B are plots of a sky-sensitivity vector of two photovoltaic strings as dependent on sky section with a different azimuthal angle, calculated in a method in accordance with embodiments of the present invention.
FIG. 6 is a plot of a sky-sensitivity vector of a photovoltaic string weighted with a solar radiance distribution, as dependent on sky section, used in a method in accordance with embodiments of the present invention.
FIG. 7 is a plot of a sky-sensitivity vector of each of a plurality of photovoltaic strings within one the groups identified within a photovoltaic power plant, calculated in a method in accordance with embodiments of the present invention.
FIG. 8 is a plot, zoomed in on two maxima, of a sky-sensitivity vector of each of a plurality of photovoltaic strings within one the groups identified within a photovoltaic power plant, calculated in a method in accordance with embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still cooperate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In a first aspect, the present invention relates to a method for simulating a quantity of interest of a solar energy installation comprising a plurality of solar energy elements. The method comprises:
a) identifying a plurality of groups of solar energy elements within the solar energy installation, wherein a performance variable is similar for each of the solar energy elements within the group, wherein the performance variable of each of the solar energy elements is predictive for a quantity of interest of the solar energy element as dependent on position of the sun relative to the position of the plurality of solar energy elements and on meteorological conditions,
b) obtaining, for each group, a representative solar energy element of which the performance variable is representative for the group,
c) simulating a quantity of interest of the representative solar energy element of each group, and
d) determining, e.g. calculating, from the quantity of interest of the representative solar energy element of each group, the quantity of interest of the solar energy installation and/or of at least one solar energy element of the solar energy installation.

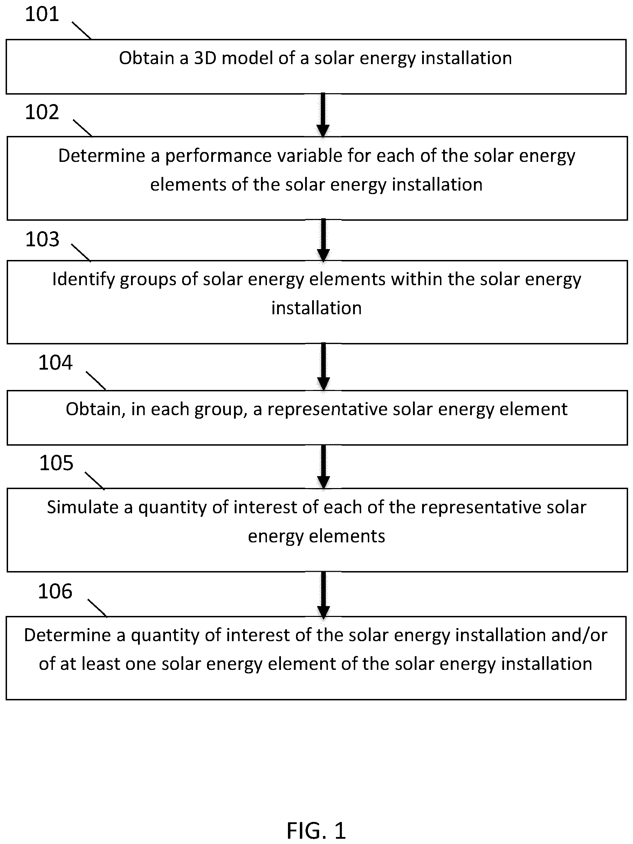

In an example of an embodiment of a method of the first aspect of the present invention, a power output is simulated of a solar energy installation, which in this example is a photovoltaic power plant. FIG. 1 is an overview of the steps that are performed in this example. It is to be noted, however, that this is only an example, and particular steps are not essential for the invention, whereas further steps may be added.

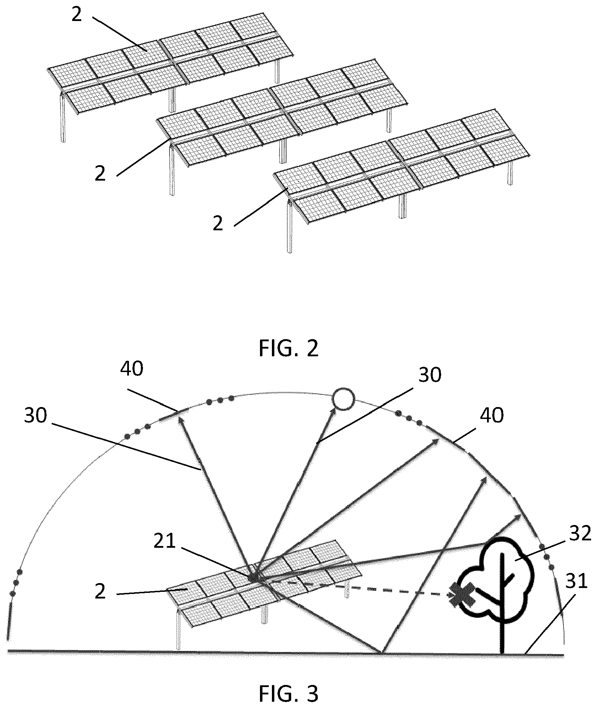

First, a 3D model is obtained 101 of the solar energy installation e.g. of the photovoltaic power plant on a terrain. The photovoltaic power plant comprises, in this example, and as an example only, 100.000 photovoltaic elements, which in this example are photovoltaic strings. The 3D model of the photovoltaic power plant comprises a 3D model of the 100.000 photovoltaic strings, a 3D model of the terrain, and a 3D model of further objects, comprising trees, buildings, and electrical pylons, which may cast a shadow over particular photovoltaic strings. FIG. 2 is a schematic representation of a small part of the 3D model, which in this example is a CAD model, of the photovoltaic power plant, showing three photovoltaic strings (2).

In a second step 102, making use of this 3D model, a performance variable, which in this example is a sky-sensitivity vector, is determined e.g. calculated for each of the 100.000 solar energy elements, e.g. photovoltaic strings, of the photovoltaic power plant. As is schematically shown in FIG. 3, in this example, to calculate the sky-sensitivity vector, backward Monte-Carlo ray tracing may for instance be used, wherein propagation of a plurality of rays 30, propagating from a plurality of random locations 21 on each of the plurality of photovoltaic strings 2, in a random direction, and towards a plurality of sky-sections 40, is modelled. In the example under consideration, the sky is divided in 145 sky sections 40. However, the invention is not limited thereto, and depending on the required accuracy, many less or many more sky sections 40 may be used in the calculations, possibly covering instead only a part of the sky. In this example, reflection of the rays 30 by the plurality of photovoltaic strings 2, by the terrain 31, and by the further objects 32, is taken account of. Although this yields very accurate results, in particular for comparatively simple photovoltaic power plants e.g. not comprising bifacial photovoltaic solar cells, reflection may instead be ignored, to limit a required computational time.

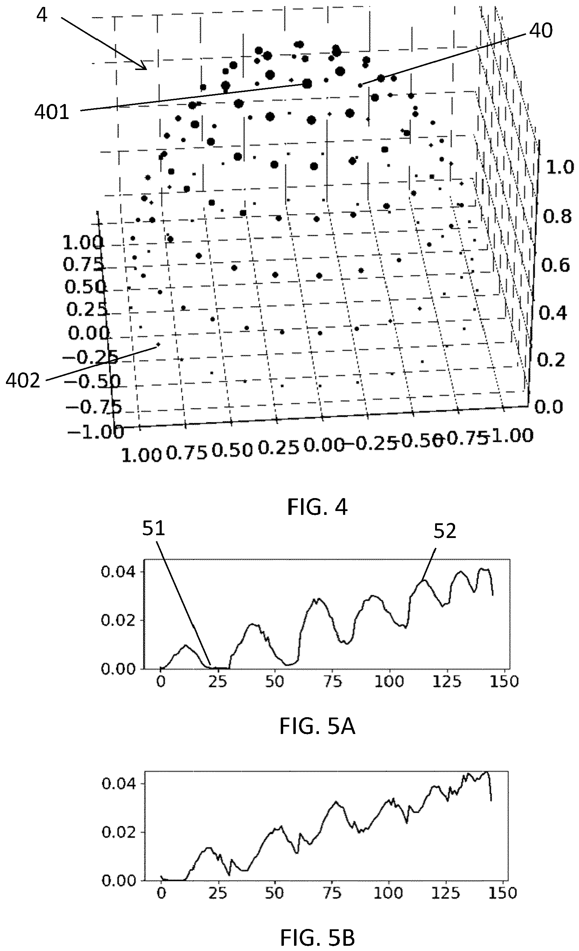

Reference is made to FIG. 4, which is a 3D plot of the sky-sensitivity vector as calculated for an exemplary photovoltaic string of the photovoltaic power plant, wherein the sky-sensitivity vector is projected on a sky dome 4 that is a unit sphere that represents the sky. In this example, the sky sections 40 are circular sections of the sky, but the present invention is not limited thereto and the sky sections may have any suitable shape, such as square or rectangular. Therefore, each of the plurality of sky sections 40 on the sky dome is indicated by a circular dot 40. The size of the circular dot 40 corresponds to the amount of rays calculated in the backward Monte Carlo ray tracing model to propagate from the exemplary photovoltaic string to the corresponding sky section 40. Herein, larger dots 401 correspond to sky sections 40 to which a larger amount of rays propagated in the backward Monte-Carlo ray tracing model, or equivalently, to sky sections 40 from which the exemplary photovoltaic string has a high visibility. For instance, the photovoltaic string may face sky sections 40 corresponding to lighter dots. Furthermore, it may be that no objects block rays from propagating from the exemplary photovoltaic string to the sky sections corresponding to lighter dots. Smaller dots 402 correspond to sky sections to which a smaller amount of rays propagated in the backward Monte-Carlo ray tracing model, or equivalently, to sky sections 40 from which the exemplary photovoltaic string has a low visibility, for instance because rays were blocked by objects or because no surface of the exemplary photovoltaic string faces the sky sections 40 corresponding to smaller dots 402. Similarly, the size of the circular dot corresponds to a sensitivity of the exemplary photovoltaic string to radiation from the corresponding sky section 40. Larger dots 401 therefore correspond to a larger sensitivity of the photovoltaic string towards radiation from the corresponding sky section 40, and smaller dots 401 correspond to a smaller sensitivity of the photovoltaic string towards radiation from the corresponding sky section 40.

Reference is made to FIG. 5A and FIG. 5B, which are two plots of the sky-sensitivity vector for two different photovoltaic strings of the photovoltaic power plant, that is, wherein the visibility i.e. sensitivity of each of the plurality of photovoltaic strings is plotted as a function of sky section. Herein, the azimuthal angle of the photovoltaic strings is different, namely 120° for the photovoltaic string of FIG. 5A and 240° for the photovoltaic string of FIG. 5B. As may be expected, the sky-sensitivity vector can be observed to be clearly different for the two photovoltaic strings. These plots correspond to a different way of displaying the sky-sensitivity vector of FIG. 4. In the plots of FIG. 5A and FIG. 5B, is can be clearly observed that the photovoltaic strings are not very sensitivity towards radiation from some of the sky sections 51 (i.e. corresponding to the small dots in FIG. 4), whereas the photovoltaic strings are very sensitivity towards radiation from other sky sections 52 (i.e. corresponding to the large dots in FIG. 4).

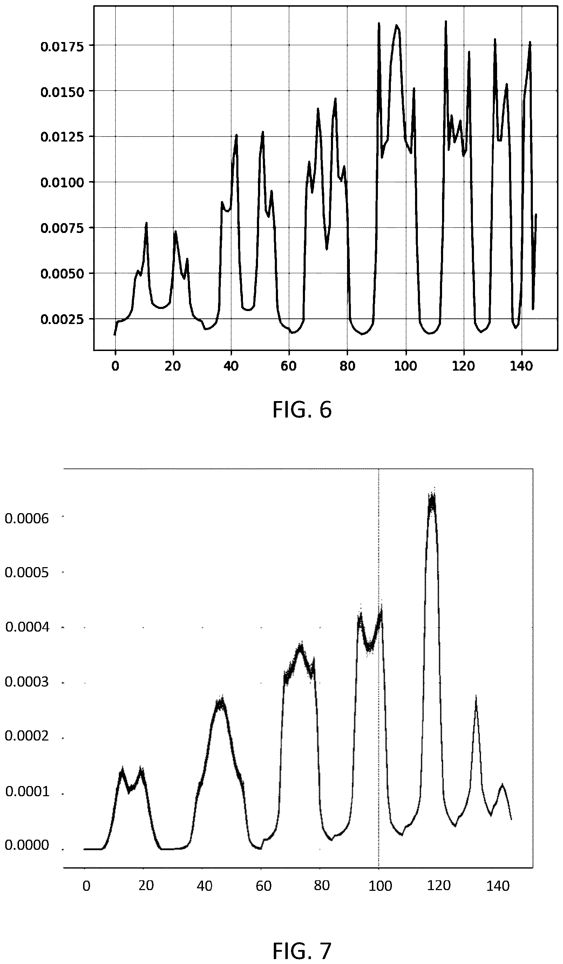

In embodiments of the present invention, the sky-sensitivity vector is weighted with a solar radiance distribution. Some sky sections correspond to a very low annual mean solar radiance. For instance, for a photovoltaic power plant in the northern hemisphere, sky sections to the north generally have a very low annual mean solar radiance. Other sky sections correspond to a very high annual mean solar radiance. For instance, for a photovoltaic power plant in the northern hemisphere, sky sections to the south generally have a relatively high annual mean solar radiance. In identifying groups of photovoltaic strings, sky sections corresponding to a very low annual mean solar radiance may be less relevant than sky sections corresponding to a very high annual mean solar radiance. Therefore, the sky-sensitivity vector of each of the plurality of photovoltaic strings of the photovoltaic power plant, such as shown in FIG. 5A and FIG. 5B, may be weighted with the solar radiance distribution. This may yield a weighted sky-sensitivity vector, weighted with the solar radiance distribution, such as shown in FIG. 6 for one photovoltaic string.

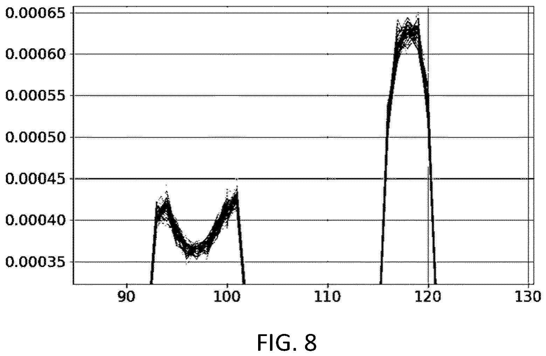

However, weighting is not required: in this example, the step of identifying the groups 103 (i.e. referring back to FIG. 1) is performed using the sky-sensitivity vector that is not weighted with the solar radiance distribution. In this example, the amount of groups of photovoltaic strings is predetermined. The amount may for instance be a small number e.g. two, three or four, or may be a larger number, thereby possibly increasing the accuracy of the calculations. However, the invention is not limited thereto. Furthermore, instead, the maximum dissimilarity on the sky-sensitivity vector within each group of photovoltaic strings could be predetermined. In this example, the predetermined amount of groups of photovoltaic strings is identified within the photovoltaic power plant, such that each of the photovoltaic strings within the group has a similar sky-sensitivity vector. For this, any clustering algorithm may be used. In this example, the clustering algorithm yields the predetermined amount of groups of photovoltaic strings. In FIG. 7, the sky-sensitivity vector of each of the photovoltaic strings an exemplary group is plotted as a thin line. FIG. 8 zooms in on two of the peaks. Clearly, there is good overlap between the sky-sensitivity vectors of the different photovoltaic strings of the exemplary group, that is, the sky-sensitivity vector of each of the photovoltaic elements within the exemplary group is similar.

Turning back to FIG. 1 now, in a next step 104, within each of the groups, a representative photovoltaic string is obtained, which is, in this example, the photovoltaic string of which the sky-sensitivity vector is most similar to the centroid of the group. The representative of the exemplary group is plotted as the thick line in FIG. 7 and FIG 8. It can be observed that the sky-sensitivity vector of the representative photovoltaic string of the representative group, plotted as a thick line, is very similar to the sky-sensitivity vector of each of the photovoltaic strings of the representative group, plotted as a thin line.

In this example, in a next step 105, for each of the obtained, e.g. identified, representative photovoltaic strings, the power output is simulated, using a thermal-electrical simulation. Advantageously, in this example, the power output is only calculated for a small amount of photovoltaic strings, that is, an amount equal to the predetermined amount of groups, among the 100.000 photovoltaic strings of the photovoltaic power plant. As simulating a power output may be computationally very demanding, in particular when a high accuracy is required, an enormous amount of time may be saved by embodiments of the present invention.

In this example, in a next step 106, the quantity of interest, e.g. the power output, of the photovoltaic power plant is determined, e.g. calculated. For this, first, the simulated power output of each of the representative photovoltaic strings is assigned to each of the photovoltaic strings of the group of which the representative photovoltaic string is the representative. Advantageously, as the sky-sensitivity vector is similar for each of the photovoltaic strings of the group, the power output of each of the photovoltaic strings of the group is also similar. Thereby, by simulating the power output of only a small amount of photovoltaic strings, the power output of each of the 100.000 photovoltaic strings of the photovoltaic power plant is determined. Finally, the power output of each of the photovoltaic strings of the photovoltaic power plant is added up, thereby yielding the power output of the photovoltaic power plant.

It is to be understood that although preferred embodiments, specific constructions and configurations, as well as materials, have been discussed herein for devices according to the present invention, various changes or modifications in form and detail may be made without departing from the scope and spirit of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A method for simulating a quantity of interest of a solar energy installation comprising a plurality of solar energy elements (2) and/or of parts thereof, the method comprising:
a) identifying (103) a plurality of groups of solar energy elements (2) within the solar energy installation, wherein a performance variable is similar for each of the solar energy elements (2) within the group, wherein the performance variable of each of the solar energy elements (2) is predictive for a quantity of interest of the solar energy element (2) as dependent on position of the sun relative to the position of the plurality of solar energy elements (2) and on meteorological conditions,
b) obtaining (104), for each group, a representative solar energy element (2) of which the performance variable is representative for the group,
c) simulating (105) a quantity of interest of the representative solar energy element (2) of each group, and
d) determining (106), from the quantity of interest of the representative solar energy element (2) of each group, the quantity of interest of the solar energy installation and/or of at least one solar energy element (2) of the solar energy installation.

2. The method according to claim 1, wherein the amount of groups of solar energy elements (2) is predetermined or wherein a maximum dissimilarity on the performance variable of the solar energy elements (2) in each group is predetermined.

3. The method according to any of the previous claims, wherein the performance variable is a sky-sensitivity vector comprising a sensitivity of the solar energy element (2) to radiance from each of a plurality of sky sections (40).

4. The method according to claim 3, wherein the sky-sensitivity vector is weighted with a solar radiance distribution as dependent on sky section (40).

5. The method according to any of claims 3 or 4, wherein the sky-sensitivity vector for the solar energy element (2) is determined (102) by solving a Rendering equation.

6. The method according to claim 5, wherein solving the Rendering equation for the solar energy element comprises modelling propagation of a plurality of rays from the photovoltaic element towards each of the plurality of sky sections (20) by means of backward Monte-Carlo ray tracing.

7. The method according to any of the previous claims, applied for the solar energy installation being located on a terrain (31), wherein the performance variable is calculated by taking into account a 3D layout of the solar energy elements (2) in the solar energy installation and/or a 3D layout of the terrain (31), and possibly of further objects (32) on the terrain (31).

8. The method according to any of the previous claims, wherein identifying (103) the plurality of groups comprises applying a clustering algorithm such as a k-nearest neighbours algorithm or a k-means algorithm.

9. The method according to any of the previous claims, wherein obtaining (104) the representative solar energy element (2) for each group comprises identifying a representative solar energy element (2) within each group.

10. The method according to any of the previous claims, wherein simulating (105) the quantity of interest of the representative solar energy element (2) of each group comprises simulating as a function of time-dependent environmental conditions.

11. The method according to any of the previous claims, wherein the solar energy element is a photovoltaic element (2), wherein simulating (105) the quantity of interest of the representative photovoltaic element (2) of each group comprises: simulating an irradiance of the representative photovoltaic element (2) of each group, and, using the irradiance, performing a thermal-electrical simulation of the representative photovoltaic element (2) of each group.

12. The method according to any of the previous claims, wherein determining (106) the quantity of interest of the solar energy installation comprises assigning to each solar energy element (2) of the group a quantity of interest derived from the quantity of interest of the representative solar energy element (2) of that group.

13. Use of a performance variable to identify a plurality of groups of solar energy elements (2) within a solar energy installation for calculating a quantity of interest of the solar energy installation and/or of at least one solar energy element (2) of the solar energy installation.

14. A data processing system comprising means for carrying out the steps of the method of any of claims 1 to 12.

15. A computer program comprising instructions which, when the program is executed by a computer, cause the computer to carry out the steps of the method of any of claims 1 to 12.
